# EUROPEAN PATENT APPLICATION

(11) **EP 3 505 861 A1**
(43) Date of publication of application: **03.07.2019**
(21) Application number: 18214504.5
(22) Date of filing: 20.12.2018
(51) Int. Cl.: F28F 9/02, F28D 1/053, F28D 21/00

(54) **EVAPORATOR HAVING CRIMPED END PLATES**

(30) Priority: 29.12.2017 US 201715858157
(71) Applicant: Air International (US) Inc., Auburn Hills, Michigan 48326 (US)
(72) Inventor: WIJAYA, Halim, Sterling Heights, MI 48310-3613 (US)
(74) Representative: Tilmann, Max Wilhelm

(57) **Abstract**

A evaporator provides an evaporator that includes an evaporator core, an evaporator tank attached to the evaporator core, at least one baffle incorporated into the evaporator tank, and multi-piece end plate assemblies attached to the tank. Each end plate assembly includes inner and an outer end plate layers. Each of the layers includes crimps. The inner end plate layer is preliminarily attached to the open end of the evaporator tank, during which proper alignment of the plate to the tank is made. The crimps of the inner end plate layer are crimped over. The outer end plate layer is then preliminarily attached to the inner end plate layer by crimping, thereby allowing preliminary attachment of the end plates to the tank to assure proper alignment prior to the end plates being fixed in position by a method such as brazing.

## Description

The disclosed inventive concept relates to vehicle air conditioning systems and particularly to the evaporator of such systems. More particularly, the disclosed inventive concept relates to an end plate assembly for an evaporator tank in which the end plate assembly comprises an inner end plate layer and an outer end plate layer in which each of the two plate layers has crimps. The crimps of the inner end plate layer are crimped to the end of the evaporator tank while the crimps of the outer end plate layer are crimped to the inner end plate layer and to the evaporator tank. The crimps allow for preliminary attachment of the end plates to assure proper alignment prior to the plates being fixed to the evaporator tank. Fixing of the plates to the evaporator tank may be made by brazing or another method of permanent fixation.

### BACKGROUND OF THE INVENTION

Most vehicles today include air conditioning systems to provide for improved occupant comfort. While being first introduced in the automotive world several decades ago, air conditioning systems have changed little. Thus the fundamental parts of the modern vehicle's air conditioning system are known and understood. These parts include the compressor, the condenser, the evaporator, the thermal expansion valve, and the drier or accumulator. In many ways the compressor is the heart of the vehicle's air conditioning system. The compressor pressurizes hot gaseous refrigerant and forces it on to the condenser. The condenser, which is like a small radiator, cools the hot gases received from the compressor. As these gases cool, they become liquid in the condenser.

Liquid refrigerant leaves the condenser under high pressure and enters the drier. The drier catches any moisture, typically in the form of liquid water, that may inadvertently have entered the system. The liquid refrigerant, once cleared of any water (moisture), flows to the expansion valve which functions to remove pressure from the liquid refrigerant and literally allows it to expand. This reduction of pressure allows the liquid refrigerant to return to the vapor stage in the evaporator, the refrigerant's next stop.

The evaporator is also similar in shape and function to a small radiator. Typically the evaporator is fitted inside of the vehicle's passenger compartment in or around the instrument panel. The still-liquid refrigerant enters the evaporator under low pressure from the expansion valve. The liquid refrigerant vaporizes while absorbing heat from inside the car. Cold air is circulated within the passenger compartment by a fan that pushes air across the fins of the evaporator. Low pressure refrigerant, now in gaseous form, exits the evaporator and returns to the compressor where the cycle is repeated. Evaporators are typically manufactured from aluminum and usually include an upper tank, a lower tank and a series of refrigerant-containing tubes fitted there between. Baffles are located within the tanks to regulate the flow of liquid refrigerant. The baffles are usually brazed to the inner wall of the tank.

In addition to internal baffles, the ends of each tank are fitted with end plates that close the tanks. The end plates are usually brazed to the tanks. Refrigerant inlets and outlets are formed in the end plates. As with the interior baffles, the end plates occasionally become misaligned prior to brazing or suffer from incomplete brazing, leading to leakage when the refrigerant is introduced into the tank.

Accordingly, an improvement in evaporator design and assembly is required to overcome the challenges faced by the prior art.

### SUMMARY OF THE INVENTION

The disclosed inventive concept overcomes the problems associated with known evaporators by providing an arrangement in which the end plates are fixed in position prior to brazing to provide an accurate and fluid-tight seal without error and with minimum production time. The disclosed inventive concept provides an evaporator that includes an evaporator core, an evaporator tank attached to the evaporator core, one or more baffles incorporated into the evaporator tank, and multi-piece end plate assemblies attached to the tank ends.

The evaporator tank includes an outer wall and an end opening. The end plate assembly is attached to the end opening to close the opening. The end plate assembly includes an inner end plate layer and an outer end plate layer. Each of the end plate layers includes crimps. The crimps of the inner end plate layer are crimped to the end of the evaporator tank while the crimps of the outer end plate layer are crimped to the inner end plate layer and to the evaporator tank. The end plate assembly is fixed to the evaporator tank by brazing or another method of permanent fixation. The end plate assembly includes a liquid refrigerant input passageway and a gas refrigerant output.

The end plate assembly of the disclosed inventive concept provides for a method of properly aligning and securing the end plate assembly to the evaporator tank using crimps prior to fixation by, for example, brazing. This approach overcomes the challenges faced by manufacturers today in which the end plate may move out of position prior to permanent fixation.

The arrangement of the disclosed inventive concept provides an above advantages and other advantages and features will be readily apparent from the following detailed description of the preferred embodiments when taken in connection with the accompanying drawings.

### BRIEF DESCRIPTION OF THE DRAWINGS

For a more complete understanding of this invention, reference should now be made to the embodiments illustrated in greater detail in the accompanying drawings and described below by way of examples of the invention wherein:
- FIG. 1: is an isometric view of an evaporator according to the disclosed inventive concept;
- FIG. 2: is an exploded view of the upper portion of the evaporator of Figure 1 showing the upper tank in spaced apart relation to the cooling fins and the end plate assemblies;
- FIG. 3: is a perspective view of a portion of the evaporator illustrating an end plate assembly attached to the upper tank portions;
- FIG. 4: is a view similar to that of Figure 3 but showing part of the upper tank portions, end plate assembly, and the cooling fins in cutaway;
- FIG. 5: is an isometric view similar to that of Figure 3 but viewed from an alternative angle; and
- FIG. 6: is an end view of a portion of the evaporator of the disclosed inventive concept in which the inner end plate is shown.

### DETAILED DESCRIPTION OF THE PREFERRED EMBODIMENT

In the following figures, the same reference numerals will be used to refer to the same components. In the following description, various operating parameters and components are described for different constructed embodiments. These specific parameters and components are included as examples and are not meant to be limiting.

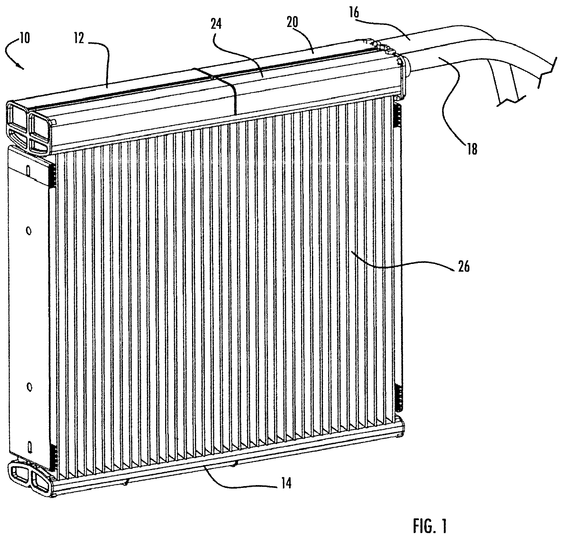

The evaporator for use with an air conditioning system for a vehicle according to the disclosed inventive concept is illustrated in its various embodiments in Figures 1 through 6. However, it is to be understood that the illustrated embodiments are suggestive and are not intended as being limiting.

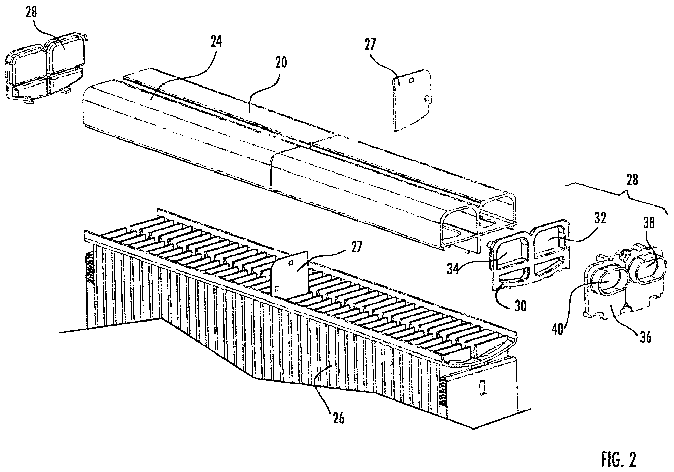

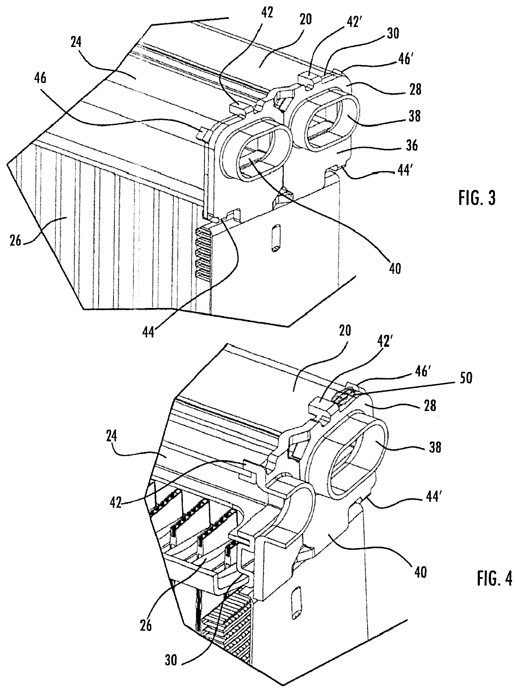

The evaporator of the disclosed inventive concept is illustrated in Figure 1 while the end plate assemblies are illustrated in Figure 2. The evaporator of the disclosed inventive concept is a multi-pass evaporator having a thickness range of between about 25 mm and 80 mm. Figures 3 through 6 illustrate the end plate assembly and its component parts. Regardless of the embodiment, the evaporator of the disclosed inventive concept overcomes challenges and limitations associated with the construction of current evaporators.

Referring to Figure 1, an evaporator, generally illustrated as 10, is shown. The overall configuration of the evaporator 10 as illustrated is intended as being suggestive and not limiting.

The evaporator 10 includes an upper tank assembly 12 and a lower tank assembly 14. The upper tank assembly 12 and the lower tank assembly 14 are typically made of a metal, although other materials including polymerized materials may be used alone or in combination. A lower pressure, liquid refrigerant input 16 is provided as is a lower pressure, gas refrigerant output 18. The liquid refrigerant input 16 is connected to liquid input upper tank portion 20. The gas refrigerant output 18 is connected to a gas output upper tank portion 24. A series of refrigerant-containing tubes 26 fluidly connect the upper tank assembly 12 and the lower tank assembly 14.

Referring to Figure 2, an exploded view of the upper portion of the evaporator 10 is illustrated in spaced apart relation to the refrigerant-containing tubes 26, a pair of baffles 27, and a pair of end plate assemblies 28. One of the end plate assemblies 28 is shown separated into its two portions, an inner end plate layer 30 having a liquid refrigerant input passageway 32 and a gas refrigerant output passageway 34, and an outer end plate layer 36 having a liquid refrigerant input port 38 (connected to the liquid refrigerant input 16) and a gas refrigerant output port 40 (connected to the gas refrigerant output 18). The illustrated shapes of the inner end plate layer 30 and the outer end plate layer 36 may be altered from the illustrated shapes without varying the scope of the present invention.

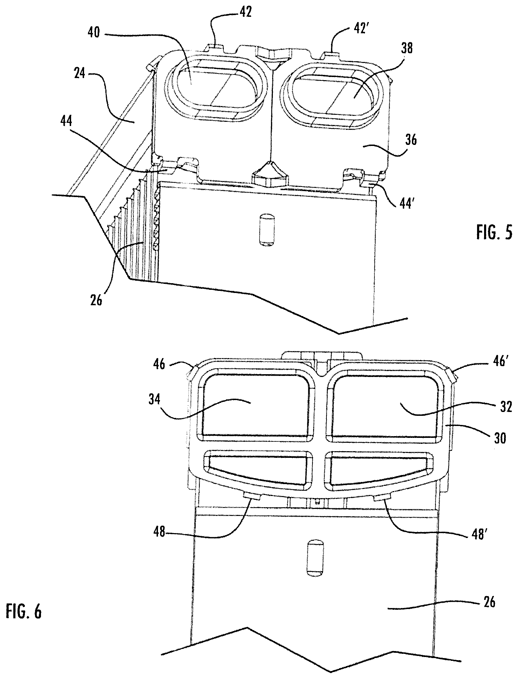

Referring to Figures 3 through 6, various partial views of the evaporator are illustrated. Figure 3 provides a perspective view of part of the liquid input upper tank portion 20 and part of the gas output upper tank portion 24. Figure 4 is similar to Figure 3, but illustrates a cutaway view of the gas output upper tank portion 24 and the refrigerant-containing tubes 26. Figure 5 illustrates a view similar to that of Figure 3, but taken from a different point of view. Figure 6 is an end view of a portion of the evaporator 10 showing the inner end plate layer 30.

As noted above relative to Figure 2, the end plate assemblies 28 includes two portions, the inner end plate layer 30 having the liquid refrigerant input passageway 32 and the gas refrigerant output passageway 34 and the outer end plate layer 36 having the liquid refrigerant input port 38 (connected to the liquid refrigerant input 16) and the gas refrigerant output port 40 (connected to the gas refrigerant output 18).

The end plate assembly 28 of the disclosed inventive concept is attached to the open ends of the liquid input upper tank portion 20 and the gas output upper tank portion 24 prior to permanent fixation by, for example, brazing. This preliminary attachment assures proper alignment of the end plate assembly 28 relative to the liquid input upper tank portion 20 and the gas output upper tank portion 24 thereby forming a proper, leak-proof fit. To achieve this accuracy of alignment, an array of crimps is provided on both the inner end plate layer 30 and the outer end plate layer 36.

The outer end plate layer 36 includes a pair of spaced apart upper outer end plate crimps 42 and 42' and a pair of spaced apart lower outer end plate crimps 44 and 44'. The inner end plate layer 30 includes a pair of spaced apart upper inner end plate crimps 46 and 46' and a pair of spaced apart lower inner end plate crimps 48 and 48'. The pair of spaced apart upper inner end plate crimps 46 and 46' and the pair of spaced apart lower inner end plate crimps 48 and 48' of the inner end plate layer 30 are not as long as the pair of spaced apart upper outer end plate crimps 42 and 42' and the pair of spaced apart lower outer end plate crimps 44 and 44' of the outer end plate layer 36. The number and placement of the crimps may be varied from the arrangement shown.

To assure proper preliminary attachment of the end plate assembly 28 to the open ends of the liquid input upper tank portion 20 and the gas output upper tank portion 24, the inner end plate layer 30 is placed onto the open ends of the liquid input upper tank portion 20 and the gas output upper tank portion 24. Proper alignment of the inner end plate layer 30 relative to the open ends of the liquid input upper tank portion 20 and the gas output upper tank portion 24 is observed. After proper alignment is confirmed, the pair of spaced apart upper inner end plate crimps 46 and 46' and the pair of spaced apart lower inner end plate crimps 48 and 48' are crimped over the ends of the liquid input upper tank portion 20 and the gas output upper tank portion 24 using an appropriate crimping tool, thereby preliminarily fixing the inner end plate layer 30 to the liquid input upper tank portion 20 and the gas output upper tank portion 24.

Once the pair of spaced apart upper inner end plate crimps 46 and 46' and the pair of spaced apart lower inner end plate crimps 48 and 48' are crimped over and preliminary attachment of the inner end plate layer 30, the outer end plate layer 36 is placed over the inner end plate layer 30. Again, proper alignment of the outer end plate layer 36 relative to the inner end plate layer 30 is observed. Once the desired alignment of the outer end plate layer 36 relative to the inner end plate layer 30 is verified, the pair of spaced apart upper outer end plate crimps 42 and 42' and the pair of spaced apart lower outer end plate crimps 44 and 44' are folded over both the inner end plate layer 30 and the ends of the liquid input upper tank portion 20 and the gas output upper tank portion 24, again using an appropriate crimping tool. The ends of the liquid input upper tank portion 20 and the gas output upper tank portion 24 may have flanges formed thereon to which the crimps may be mechanically attached by the crimping tool.

After the crimps of the inner end plate layer 30 and the outer end plate layer 36 are fully crimped over in place, the inner end plate layer 30 and the outer end plate layer 36 are fixed in position to the liquid input upper tank portion 20 and the gas output upper tank portion 24 by any known method of permanent attachment such as, but not limited to, brazing. A portion of a brazed material 50 is illustrated in Figure 4. The amount of material representing brazed material 50 shown is for illustrative purposes only, as, in practice, the brazing material would be liberally applied between the stamped aluminum sheets. Furthermore, the use of a brazing material 50 or another material not only fixes the inner end plate layer 30 and the outer end plate layer 36 to the liquid input upper tank portion 20 and the gas output upper tank portion 24, but also forms a fluid-tight seal that prevents the outflow of fluid from the evaporator 10.

The disclosed inventive concept shown in the accompanying figures and described above effectively overcomes the problems known to be associated with known evaporators. By providing a system and method for properly aligning the end plates relative to the tank portions, proper, leak-proof attachment of the end plates can be achieved.

While the preferred embodiments of the disclosed inventive concept have been discussed are shown in the accompanying drawings and are set forth in the associated description, one skilled in the art will readily recognize from such discussion, and from the accompanying drawings and claims that various changes, modifications and variations can be made therein without departing from the true spirit and fair scope of the invention as defined by the following claims.

## Claims

1. An evaporator for use with a refrigerant, the evaporator comprising:
- an evaporator core;
- an evaporator tank attached to said core, said evaporator tank having an open end;
- a two-piece end plate assembly attached to said open end of said evaporator tank, said assembly including an inner plate layer attached to said open end and an outer plate layer attached to said inner plate layer.

2. The evaporator for use with a refrigerant of Claim 1, **wherein** two-piece end plate assembly includes at least a pair of spaced apart crimps.

3. The evaporator for use with a refrigerant of Claim 1, **wherein** said inner plate layer includes a pair of spaced apart crimps.

4. The evaporator for use with a refrigerant of Claim 3, **wherein** said inner plate layer includes two pairs of spaced apart crimps.

5. The evaporator for use with a refrigerant of Claim 4, **wherein** said outer plate layer includes a pair of spaced apart crimps.

6. The evaporator for use with a refrigerant of Claim 5, **wherein** said outer plate layer includes two pairs of spaced apart crimps.

7. The evaporator for use with a refrigerant of Claim 6, **wherein** each of said spaced apart crimps of said outer layer has a length and wherein each of said spaced apart crimps of said inner layer having a length, said length of at least some of said crimps of said outer layer being greater than said length of said crimps of said inner layer.

8. An evaporator for use with a refrigerant, the evaporator comprising:
- an evaporator core;
- an evaporator tank attached to said core, said evaporator tank having an open end;
- a two-piece end plate assembly attached to said open end of said evaporator tank, said assembly including an inner plate layer attached to said open end and an outer plate layer attached to said inner plate layer,
**wherein** at least one of said plate layers includes attachment crimps, whereby said attachment crimps are crimped to said open end of said evaporator tank.

9. The evaporator for use with a refrigerant of Claim 8, **wherein** said attachment crimps defines at least a pair of spaced apart crimps.

10. The evaporator for use with a refrigerant of Claim 9, **wherein** said inner plate layer includes a pair of spaced apart crimps.

11. The evaporator for use with a refrigerant of Claim 10, **wherein** said inner plate layer includes two pairs of spaced apart crimps.

12. The evaporator for use with a refrigerant of Claim 11, **wherein** said outer plate layer includes a pair of spaced apart crimps.

13. The evaporator for use with a refrigerant of Claim 12, **wherein** said outer plate layer includes two pairs of spaced apart crimps.

14. The evaporator for use with a refrigerant of Claim 13, **wherein** each of said spaced apart crimps of said outer layer has a length and wherein each of said spaced apart crimps of said inner layer having a length, said length of at least some of said crimps of said outer layer being greater than said length of said crimps of said inner layer.

15. A method of attaching an end plate assembly to an evaporator for use with a refrigerant, the method comprising:
- forming an evaporator core having an evaporator tank attached to said core, said evaporator tank having an open end;
- forming a two-piece end plate assembly comprising an inner plate layer and an outer plate layer;
- attaching said inner plate layer to said open end of said evaporator tank; and
- attaching said outer plate layer to said inner plate layer.

16. The method of attaching an end plate assembly to an evaporator of Claim 1, **wherein** said inner plate layer includes at least a pair of spaced apart inner plate crimps, and wherein the step of attaching said inner plate layer to said open end of said evaporator tank includes crimping said inner plate crimps to said open end.

17. The method of attaching an end plate assembly to an evaporator of Claim 16, **wherein** said outer plate layer includes a pair of spaced apart outer plate crimps, and wherein the step of attaching said outer plate layer to said inner plate includes cramping said inner plate crimps to said inner plate layer.

18. The method of attaching an end plate assembly to an evaporator of Claim 17, **wherein** when said crimps of said outer plate layer are crimped to said inner plate layer, said crimps of said outer plate layer are also crimped to said open end of said evaporator tank.

19. The method of attaching an end plate assembly to an evaporator of Claim 18, **wherein** said two-piece end plate assembly is fixed to said evaporator tank by a heat-induced metal joining process.

20. The method of attaching an end plate assembly to an evaporator of Claim 19, **wherein** said heat-induced metal joining process is brazing.
